# EUROPÄISCHE PATENTSCHRIFT

(11) **EP 0 510 228 B1**
(45) Veröffentlichungstag und Bekanntmachung des Hinweises auf die Patenterteilung: **22.01.1997**
(21) Anmeldenummer: 91106648.8
(22) Anmeldetag: 25.04.1991
(51) Int. Cl.: D01G 9/00, C03B 37/10

(54) **Verfahren und Vorrichtung zum Aufschliessen eines Faseragglomerats**
Method and apparatus for opening of a fiber agglomerate
Procédé et appareil pour ouvrir un agglomérat de fibres

(43) Veröffentlichungstag der Anmeldung: 28.10.1992
(73) Patentinhaber: DIDIER-WERKE AG, 65189 Wiesbaden (DE)
(72) Erfinder: Buschmann, Rüdiger, W-6209 Hohenstein-Born (DE); Baum, Karl, W-6200 Wiesbaden (DE)
(74) Vertreter: Brückner, Raimund, Dipl.-Ing.

(56) Entgegenhaltungen:
- EP-A- 0 100 942
- DE-A- 3 231 944
- GB-A- 671 232
- GB-A- 2 069 876
- US-A- 4 300 267

## Beschreibung

Die Erfindung betrifft ein Verfahren zum Aufschließen eines Faseragglomerats, insbesondere aus keramischen Fasern. Weiterhin betrifft die Erfindung eine Vorrichtung zur Durchführung des Verfahrens.

Rohfasern werden oft stark verfilzt angeliefert. Für die Weiterverarbeitung muß das Faseragglomerat so aufgeschlossen werden, daß die Fasern vereinzelt sind. Aus dem Faseragglomerat müssen für die Weiterverarbeitung auch nicht faserförmige Bestandteile und Verunreinigungen abgetrennt werden. Fasern, die in dieser Weise zu behandeln sind, sind beispielsweise Mineralfasern, Gesteinsfasern, Schlackenwolle, Glasfasern und Keramikfasern. Solche Fasern haben beispielsweise eine Länge in der Größenordnung von 0,1 bis 0,5 mm.

Solche Fasern werden beispielsweise zur Verstärkung von Dieselmotorkolben aus Leichtmetall verwendet. Es hat sich gezeigt, daß dann, wenn die Fasern nicht geeignet aufgeschlossen wurden, die nicht faserförmigen, gröberen Partikel (Shotpartikel) zwischen den Fasern verbleiben. Dies wirkt sich auf das mit den Fasern zu verstärkende Bauteil äußerst ungünstig aus.

Solche Fasern werden auch bei Ofenauskleidungen verwendet. Bei gasbeheizten Öfen, bei denen hohe Rauchgasgeschwindigkeiten auftreten, können sich Shotpartikel aus dem Faserverbund lösen. Sie fallen dann auf das Brenngut und verunreinigen dieses.

Weiterhin finden solche Fasern auch bei Faserisolationen Verwendung. Shotpartikel zwischen den Fasern können bei starken Vibrationen dazu führen, daß das von den Fasern gebildete Gerüst zerstört wird. Dies wirkt sich insbesondere bei Katalysatorpackungen oder Partikelfilterpackungen im Abgassystem eines Kraftfahrzeugs negativ aus.

Auch bei einer eventuell notwendigen Nachbearbeitung von aus nicht gereinigten Fasern hergestellten Bauteilen sind gröbere, nicht faserförmige Partikel (Shotpartikel) von Nachteil, da sie bei der Bearbeitung, z.B. durch Sägen, Schneiden, Schleifen o.ä., aus dem Bauteil ausbrechen und unerwünschte Oberflächendefekte hinterlassen können.

Nach GB 20 69 876-A wird aus einer Mineralwolle körniges Material entfernt, wobei in einer Kammer 22 aus dem aufgelockerten Material durch den perforierten Boden 24 das an Körnern angereicherte Material und das faserreiche Material nach dem Prinzip der Luftsichtung durch den oberen Abzug (exit 25) abgezogen wird. Durch EP 0 100 942 A3 ist es bekannt, zur Herstellung von körnig-freier (shot-free) Mineralwolle einen Luftsichter 37 zu verwenden. Dabei werden die gewünschten Fasern mit dem nach oben gerichteten Luftstrom abgezogen und einem Zyklonsichter 49 zugeführt. Diese Einrichtungen sind aber für eine weitgehende Trennung und Vereinzelung der keramischen Fasern nicht in jedem Fall geeignet und ausreichend.

Aufgabe der Erfindung ist es, ein Verfahren der eingangs genannten Art vorzuschlagen, mit dem das Faseragglomerat auf wirtschaftliche Weise schonend so aufgeschlossen wird, daß ein möglichst hoher Anteil der im Faseragglomerat enthaltenen, gewünschten Fasern von anderen Partikeln abgetrennt wird, ohne daß dabei aber die Fasern durch Bruch verkürzt werden. Weiterhin ist es Aufgabe der Erfidnung, eine hierfür geeignete Vorrichtung zu schaffen.

Erfindungsgemäß ist obige Aufgabe bei einem Verfahren der eingangs genannten Art dadurch gelöst, daß das Faseragglomerat trocken aus einem Aufgabebehälter chargenweise in eine Wirbelkammer geladen wird und in dieser durch einen Druckluftstrom verwirbelt wird und daß danach der Inhalt der Wirbelkammer aus dieser in eine Siebkammer gefördert, in dieser gesiebt und nicht abgesiebte, größere Faseranteile wieder dem Aufgabebehälter zugeführt werden.

Es hat sich gezeigt, daß ein direktes trockenes Sieben des Faseragglomerats nicht zu dem gewünschten Ergebnis führt, da dann aus dem angelieferten Faseragglomerats viel zu wenige der enthaltenen Fasern, die die gewünschten Abmessungen aufweisen, ausgesondert werden und dabei auch hohe Anteile an unerwünschtem Faserbruch erzeugt werden.

Auch nasses Aufschließen der Faseragglomerate und die Trennung von Fasern und gröberen, nicht faserigen Partikeln (Shotpartikeln) durch unterschiedliche Sedimentationsgeschwindigkeiten in einem flüssigen Medium ist sehr zeitaufwendig, dadurch teuer und unbefriedigend genau, da mit den gröberen Partikeln auch große Mengen an sonst verwendbarer Faser ausgetragen werden.

In der Wirbelkammer werden jeweils nur einzelne Chargen, die wesentlich kleiner sind als das Volumen des Aufgabebehälters in Druckluftstrom verwirbelt. Dabei werden in den Chargen die gewünschten Fasern von gröberen Shotpartikeln getrennt. Die Charge wird aufgelockert und aufgerissen. In diesem Zustand erfolgt dann das Sieben. Die gewünschten Fasern werden dadurch mit einem hohen Ausbeutegrad gewonnen. Bei dem Verfahren werden die Fasern gleichzeitig gereinigt.

Die gewonnenen Fasern lassen sich dann sehr leicht und gleichmäßig in Wasser dispergieren.

Das beschriebene Verfahren hat auch den Vorteil, daß es mit geringem Personaleinsatz durchgeführbar ist. Es ist auch dadurch wirtschaftlich. Darüberhinaus tritt bei dem Verfahren auch kaum Staubentwicklung auf, da das Verfahren unter Unterdruck in einem nach außen volkommen abgedichteten System durchgeführt wird.

In bevorzugter Ausgestaltung der Erfindung wird der Inhalt nach Öffnen eines zwischen der Wirkelkammer und der Siebkammer angeordneten Schleusenventils durch einen in der Siebkammer herrschenden Unterdruck abgesaugt. Dadurch werden die Fasern auf einfache Weise zum Sieb gebracht, ohne auf diesem Wege wieder zu agglomerieren.

Die nicht abgesiebten gröberen Faseranteile werden zusammen mit den Shotpartikeln wieder dem Aufgabebehälter zugeführt, so daß diese wiederholt in die Wirbelkammer gelangen. Dies verbessert die Ausbeute. Eine hohe Ausbeute zu erreichen ist wichtig, damit im Endergebnis möglichst wenige der zu reinigenden, teueren Fasern zum Abfall gelangen.

Eine erfindungsgemäße Vorrichtung zeichnet sich dadurch aus, daß von einem Aufnahmebehälter eine Fördereinrichtung zu einer Wirbelkammer führt, die mit Druckluft beaufschlagt ist und die ein Teilvolumen des in dem Aufgabenbehälter enthaltenen Faseragglomerats aufnimmt, woran sich eine Siebkammer anschließt, von der nicht abgesiebte Anteile des Faseragglomerats durch eine Verbindung in den Aufgabebehälter zurückfallen, wobei zwischen dem Aufgabebehälter und der Wirbelkammer und zwischen der Wirbelkammer und der Siebkammer jeweils ein Schleusenventil angeordnet ist.

Die beiden Schleusenventile sind geschlossen, wenn die Wirbelkammer mit Druckluft beaufschlagt ist. Sie sind wechselweise zum Befüllen und Entleeren der Wirbelkammer geöffnet.

Dadurch bleibt auch der Unterdruck in der Siebkammer im wesentlichen erhalten.

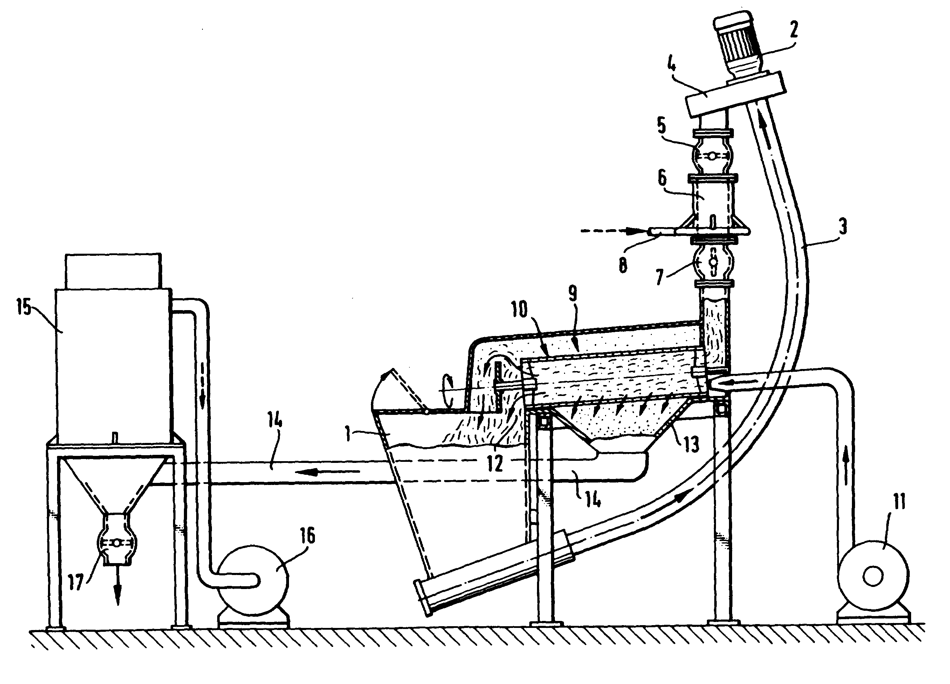

Weitere vorteilhafte Ausgestaltungen der Erfindung ergeben sich aus den Unteransprüchen und der folgenden Beschreibung. Die Figur zeigt eine Vorrichtung zum Aufschließen eines Faseragglomerats schematisch.

Die Vorrichtung weist einen Aufgabebehälter 1 auf. An dessen Grund ist eine von einem Motor 2 angetriebene Förderschnecke 3 als Fördereinrichtung angeschlossen, die aus dem Aufgabebehälter 1 Faseragglomerat nach oben fördert. Oben an der Förderschnecke 3 ist ein Ausleiter 4 vorgesehen, an den sich unten ein erstes Schleusenventil 5 anschließt. Das Schleusenventil 5 liegt am Eingang einer Wirkelkammer 6, die unten in ein zweites Schleusenventil 7 mündet. Über einen Anschluß 8 ist die Wirbelkammer 6 mit Druckluft beaufschlagbar.

Unten mündet das Schleusenventil 7 in eine Siebkammer 9, in der ein Sieb 10 geneigt angeordnet ist. An die Siebkammer 9 ist ein Gebläse 16 angeschlossen, das in der Siebkammer 9 einen Unterdruck erzeugt. Über das Druckgebläse 11 wird im Sieb 10 angelagertes Fasersiebgut örtlich aufgelockert.

Der Raum innerhalb des Siebes führt über eine Verbindung 12 in den ebenfalls unter Unterdruck stehenden Aufgabebehälter 1 zurück. Der Raum unterhalb des Siebes 10 ist über einen Trichter 13 an eine Austragsleitung 14 angeschlossen, die in einen Abscheider 15 mündet. An diesen ist ein Sauggebläse 16 angeschlossen. Unten weist er ein Antragsorgan 17 auf. Der Unterdruck beträgt beispielsweise 200 mm/WS.

Die Arbeitsweise der beschriebenen Vorrichtung ist im wesentlichen folgende:

Der Aufgabenbehälter 1 wird mit Faseragglomerat gefüllt. Mittels der Förderschnecke 3 ist Faseragglomerat zum Ausleiter 4 förderbar. Wenn das erste Schleusenventil 5 geöffnet ist, gelangt Faseragglomerat in die Wirbelkammer 6. Ist die Wirbelkammer 6 mit Faseragglomerat gefüllt, wird bei geschlossenem Schleusenventil 7 das Schleusenventil 5 geschlossen. Danach wird die Wirbelkammer 6 über Anschlüsse 8 mit Druckluft, z.B. wechselseitig, beaufschlagt. Die in der Wirbelkammer 6 enthaltene Charge des Faseragglomerats, deren Volumen wesentlich kleiner ist als das der Aufgabemenge im Aufgabebehälter 1, wird nun verwirbelt, so daß sich die Fasern gewünschter Abmessungen von enthaltenen anderen Partikeln (Shotpartikeln) trennen.

Die Druckluft ist in der Stärke und in der Anzahl der Druckstöße steuerbar, um in Abhängigkeit der eingesetzten und zu reinigenden Fasertypen einen optimalen Trennungsgrad zwischen Fasern und Shotpartikeln zu erzielen.

Danach wird bei geschlossenem Schleusenventil 5 das Schleusenventil 7 geöffnet, so daß die Fasern und die Shotpartikel unter der Wirkung des Unterdrucks in die Siebkammer 9 gesaugt werden.

Durch das rotierende Sieb 10, das beispielsweise eine Maschenweite von 0,025 mm hat, werden die Fasern gewünschter Größe abgesaugt, so daß sie in den Trichter 13 gelangen. Über das Druckgebläse 11 wird im Sieb angelagertes Fasersiebgut örtlich aufgelockert. Die in dem Sieb 10 zurückbleibenden Bestandteile gelangen über die Verbindung 12 infolge der Rotation und der Neigung des Siebes zurück in den Aufgabebehälter 1. Sie werden dann noch mehrmals zusammen mit weiteren Fasern aus dem Aufgabebehälter 1 der Wirbelkammer 6 und dem Sieb 10 zugeführt.

Die ausgetrennten Fasern gelangen über die Austragsleitung 14 in den Abscheider 15. Über das Austragsorgan 17 können sie der Weiterverarbeitung zugeführt werden.

Bei Versuchen hat sich folgensdes ergeben:

Der Aufgabebehälter 1 wurde mit 50 kg keramischen Rohfasern gefüllt. Die mittlere Faserlänge betrug 0,12 mm mit einem Shotpartikelgehalt von 3 Gew.%. Nach 8 h konnten 20 kg über ein 0,025 mm-Sieb abgesiebte Fasern entnommen werden. Diese hatten eine mittlere Faserlänge von 0,1 mm bei einem Rest-Shotpartikelgehalt von weniger als 0,001 Gew.-%. Je kg Rohfaser wurden 940 g Fasern abgesiebt, wobei 60 g Shotpartikel und Restfasern als Verlust bleiben. Der Verlust lag also bei 6 %.

## Patentansprüche

1. Verfahren zum Aufschließen eines Faseragglomerats, insbesondere aus keramischen Fasern,
dadurch gekennzeichnet, daß
das Faseragglomerat trocken aus einem Aufgabebehälter (1) chargenweise in eine Wirbelkammer (6) geladen wird und in dieser durch einen Druckluftstrom verwirbelt wird und daß danach der Inhalt der Wirbelkammer (6) aus dieser in eine Siebkammer (9) gefördert, in dieser gesiebt und nicht abgesiebte, größere Faseranteile wieder dem Aufgabebehälter (1) zugeführt werden.

2. Verfahren nach Anspruch 1,
dadurch gekennzeichnet, daß
der Inhalt der Wirbelkammer (6) nach Öffnen eines zwischen der Wirbelkammer (6) und der Siebkammer (9) angeordneten Schleusenventils (7) durch einen in der Siebkamme (9) herrschenden Unterdruck abgesaugt wird.

3. Vorrichtung zur Durchführung des Verfahrens nach Anspruch 1,
dadurch gekennzeichnet, daß
von einem Aufnahmebehälter (1) eine Fördereinrichtung zu einer Wirbelkammer (6) führt, die mit Druckluft beaufschlagt ist und die ein Teilvolumen des in dem Aufgabenbehälter (1) enthaltenen Faseragglomerats aufnimmt, woran sich eine Siebkammer (9) anschließt, von der nicht abgesiebte Anteile des Faseragglomerats durch eine Verbindung (12) in den Aufgabebehälter (1) zurückfallen, wobei zwischen dem Aufgabebehälter (1) und der Wirbelkammer (6) und zwischen der Wirbelkammer und der Siebkammer (9) jeweils ein Schleusenventil (5, 7) angeordnet ist.

4. Vorrichtung nach Anspruch 3,
dadurch gekennzeichnet, daß
an die Siebkammer (9) und den Aufgabebehälter (1) ein Unterdruck-Gebläse (16) angeschlossen ist.

5. Vorrichtung nach einem der vorhergehenden Ansprüche,
dadurch gekennzeichnet, daß
die Wirbelkammer (6) oberhalb der Siebkammer (9) angeordnet ist und der Aufgabebehälter (1) tiefer als die Siebkammer (9) liegt.

## Claims

1. Method of breaking up a fibre agglomerate, particularly of ceramic fibres, characterised in that the fibre agglomerate is loaded dry in batches from a feed container (1) into a turbulence chamber (6) and turbulence is induced in it by a compressed air flow and that the contents of the turbulence chamber (6) are thereafter conveyed from it into a sieve chamber (9), are sieved in it and unsieved, relatively large fibre constituents are fed again to the feed container (1).

2. Method as claimed in claim 1, characterised in that the contents of the turbulence chamber (6) are withdrawn by a reduced pressure prevailing in the sieve chamber (9) after opening of a sluice valve (7) arranged between the turbulence chamber (6) and the sieve chamber (9).

3. Apparatus for carrying out the method as claimed in claim 1, characterised in that a conveying device leads from a feed container (1) to a turbulence chamber (6), to which compressed air is supplied and which receives a proportion of the volume of the fibre agglomerate contained in the feed container (1) and connected to which is a sieve chamber (9), from which unsieved constituents of the fibre agglomerate fall back through a connection (12) into the feed container (1), a respective sluice valve (5,7) being arranged between the feed container (1) and the turbulence chamber (6) and between the turbulence chamber and the sieve chamber (9).

4. Apparatus as claimed in claim 3, characterised in that connected to the sieve chamber (9) and the feed container (1) there is a reduced pressure fan (16).

5. Apparatus as claimed in one of the preceding claims, characterised in that the turbulence chamber (6) is arranged above the sieve chamber (9) and the feed container (1) is situated lower than the sieve chamber (9).

## Revendications

1. Procédé pour ouvrir un agglomérat de fibres, notamment un agglomérat de fibres céramiques, caractérisé par le fait que l'on introduit de manière discontinue, à l'état sec dans une chambre de turbulence (6), l'agglomérat de fibres provenant d'une enceinte de chargement (1) et on le met en mouvement dans ladite chambre de turbulence à l'aide d'un flux d'air sous pression et par le fait qu'ensuite, on amène le contenu de la chambre de turbulence (6) dans une chambre de criblage (9), on le crible et on ramène dans l'enceinte de chargement (1) les fractions de fibres plus grandes qui n'ont pas traversé le crible.

2. Procédé selon la revendication 1, caractérisé par le fait qu'après ouverture d'une vanne (7) de sas disposée entre le chambre de turbulence (6) et la chambre de criblage (9), on aspire le contenu de la chambre de turbulence (6) à l'aide d'une dépression dans la chambre de criblage (9).

3. Dispositif pour la mise en oeuvre du procédé selon la revendication 1, caractérisé par le fait qu'un dispositif de transport qui est alimenté en air sous pression et reçoit une partie de volume de l'agglomérat de fibres contenu dans l'enceinte de chargement (1) mène d'une enceinte de chargement (1) à une chambre de turbulence (6), qu'à la chambre de turbulence se raccorde une chambre de criblage (9) depuis laquelle la fraction d'agglomérat de fibres qui n'a pas traversé le crible retombe dans l'enceinte de chargement (1) par une liaison (12), une vanne (5, 7) de sas étant disposée respectivement entre l'enceinte de chargement (1) et la chambre de turbulence (6) et entre la chambre de turbulence (6) et la chambre de criblage (9).

4. Dispositif selon la revendication 3, caractérisé par le fait qu'une turbine (16) de génération de dépression est raccordée à la chambre de criblage (9) et à l'enceinte de chargement (1).

5. Dispositif selon l'une des revendications précédentes, caractérisé par le fait que la chambre de turbulence (6) est disposée au-dessus de la chambre de criblage et que l'enceinte de chargement (1) est situé plus bas que la chambre de criblage (9).
